Europäisches Patentamt

European Patent Office

Office européen des brevets

(19)

(11) Veröffentlichungsnummer: **0 183 998 B1**

(12) **EUROPÄISCHE PATENTSCHRIFT**

(45) Veröffentlichungstag der Patentschrift: 05.06.91

(51) Int. Cl.⁵ **H04L 12/28**

(21) Anmeldenummer: 85113964.2

(22) Anmeldetag: 02.11.85

(54) Nachrichtenkollisionserkennung.

(30) Priorität: 13.11.84 US 670682
13.11.84 US 670701

(43) Veröffentlichungstag der Anmeldung:
11.06.86 Patentblatt 86/24

(45) Bekanntmachung des Hinweises auf die
Patenterteilung:
05.06.91 Patentblatt 91/23

(84) Benannte Vertragsstaaten:
BE DE FR GB NL

(56) Entgegenhaltungen:
GB-A- 2 106 358
US-A- 4 412 347

ELECTRONICS DESIGN, Band 32, Nr. 15, 26.
Juli 1984, Seiten 221-226,228, Waseca, MN,
Denville, NJ, US; H.-M. HAUNG et al.:
"Manchester chip eases the design of Ethernet systems"

PATENT ABSTRACTS OF JAPAN, Band 9, Nr.
23 (E-293)[1746], 30. Januar 1985; & JP-A-59
171 237 (FUJITSU K.K.) 27-09-1984

(73) Patentinhaber: Alcatel N.V.
De Lairessestraat 153
NL-1075 HK Amsterdam(NL)

(72) Erfinder: Gerety, Eugene Peter
18 Longmeadow Drive
Wolcott, CT 06716(US)

(74) Vertreter: Villinger, Bernhard, Dipl.-Ing. et al
Standard Elektrik Lorenz AG Patent- und Lizenzwesen Postfach 30 09 29
W-7000 Stuttgart 30(DE)

**Beschreibung**

Die Erfindung betrifft eine Schaltungsanordnung zum dezentralen Erkennen von Nachrichtenkollisionen in einem Nachrichtenübermittlungsnetzwerk, an das eine Vielzahl von Netzknoten angeschlossen sind, die selbständig Nachrichten übertragen.

In heutigen Nachrichtenübermittlungsnetzwerken sind eine Vielzahl von Datenübertragungs/Empfangselementen untereinander verbunden, wobei jedes Element Daten Senden und Empfangen kann. Dabei erfolgt die Verbindung häufig über ein Koaxialkabel. Wenn nun mehr als ein solches Element gleichzeitig Daten über das gemeinsame Koaxialkabel übertragen wollen, treten übermäßige Fehler und Datenverluste auf, so daß keine ausreichende Übertragung möglich wird.

Somit ist ein Hauptmerkmal für jedes Nachrichtenübermittlungsnetzwerk die Anpassung oder Verteilung der Übertragungszeit auf alle Teilnehmer und zwar möglichst unabhängig von der Baugröße des Netzes.

Neuerdings sind insbesondere lokale Netzwerke (LAN = local area network) und sogenannte Nahverkehrsnetzwerke (SHLAN = short haul local area netwerk) von Interesse. Sie werden häufig für eng benachbarte Orte wie Universitäten ausgelegt und enthalten eine Vielzahl von Netzknoten, die selbst wieder mit einer Vielzahl peripherer Einheiten verbunden sind.

Zur Lösung des zuvor genannten Kollisionsproblems wird häufig ein Trägersignal benutzt. Es wird also ein analoges Trägersignal über das Koaxialkabel zu jedem Netzknoten übertragen. Jeder Netzknoten ist so ausgelegt, daß er dieses Trägersignal detektieren kann. Ein bekanntes Verfahren ist das "Carrier Sense Multiple Access with Collision Detection CSMA/CD" Verfahren. Dabei bedeutet der Ausdruck "Carrier Sense", daß jeder Netzknoten der Daten übertragen will, zunächst das Vorliegen eines Trägersignals erfragt. Falls das Koaxialkabel bereits durch einen anderen Netzknoten belegt ist, muß er solange warten, bis die Übertragung wieder freigegeben ist. "Multiple Access" bedeutet, daß jeder Netzknoten dezentral auf das gemeinsame Koaxialkabel zugreifen kann. "Collision Detection" bezieht sich auf den Belegungszustand des Koaxialkabels, d.h. jeder Netzknoten kann mit einer Übertragung von Daten beginnen, wenn eine Freigabe vorliegt.

Das Trägersignal wird in jedem Netzknoten detektiert, so daß jeder Netzknoten der ein Trägersignal empfängt dadurch die Information erhält, daß beim gleichzeitigen Senden eine Datenkollision auftreten kann. Eine Sendebereitschaft eines Netzknotens wird sodann solange zurückgestellt, bis das Trägersignal aufgehoben wird.

Es ist bereits eine Präzisionsspannungs- und Stromquelle für eine Sende-/Empfangsschaltung in einem das "Carrier Sense Multiple Access with Collision Detection CSMA/CD" Verfahren benutzenden Nachrichtennetzwerkes bekannt (US-A-4 412 347), in dem ein Netzknoten eine Kollisionserkennungsschaltung enthält, der die Präzisionsstromquelle und einen Erkennungsteil aufweist.

Eine solche Trägersignallösung ist sehr aufwendig und teuer, da je Netzknoten eine umfangreiche Schnittstellenanordnung erforderlich ist.

Die technische Aufgabe gemäß der Erfindung besteht darin, eine dezentrale sichere und kostengünstige Schaltungsanordnung zum Erkennen von Nachrichtenkollisionen in einem Nachrichtenübermittlungsnetz zu realisieren.

Eine erfindungsgemäße Lösung dieser Aufgabe erfolgt nach der im Patentanspruch 1 angegebenen technischen Lehre.

Eine weitere erfindungsgemäße Lösung dieser Aufgabe erfolgt nach der im Patentanspruch 7 angegebenen technischen Lehre.

Weitere vorteilhafte Ausbildungen des Gegenstandes der Erfindung sind den Unteransprüchen zu entnehmen.

Für die Lösungen gemäß Anspruch 1 und Anspruch 7 werden im folgenden je ein Ausführungsbeispiel anhand der Zeichnungen erläutert. Es zeigen.

Figur 1   ein prinzipielles Blockschaltbild gemäß der Erfindung,

Figur 2   ein Blockschaltbild eines Netzknotenchips,

Figur 3   ein Blockschaltbild der erfindungsgemäßen Schaltungsanordnung nach Patentanspruch 1,

Figur 4   eine Hardware-Darstellung gemäß der Erfindung,

Figur 5   eine Darstellung der Kollisionserkennungsschaltung gemäß der Erfindung und

Figur 6   ein Blockschaltbild der erfindungsgemäßen Schaltungsanordnung nach Patentanspruch 7.

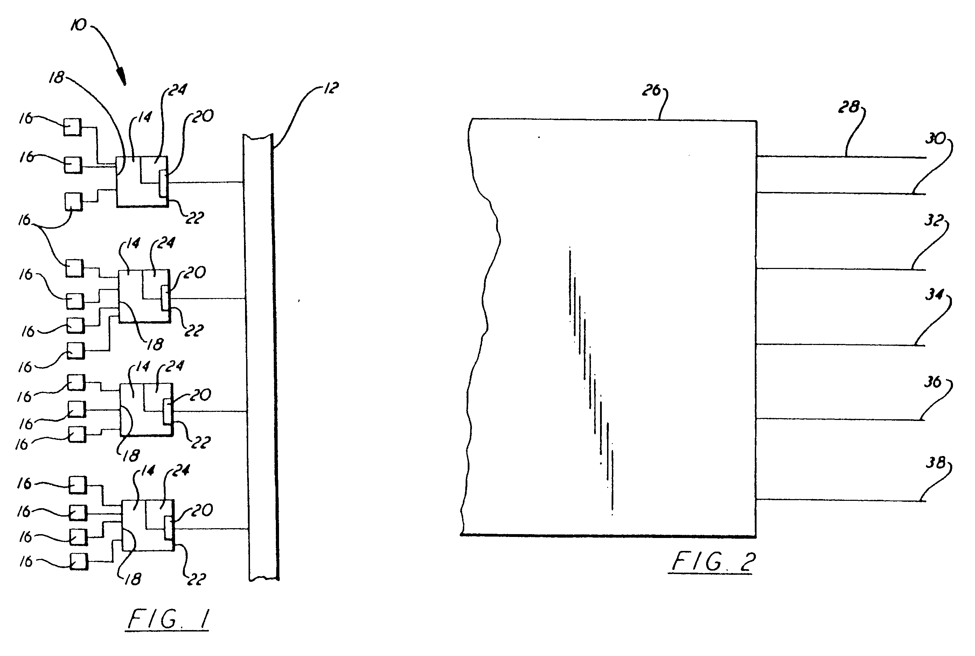

Ein Teil eines Nachrichtenübermittlungsnetzwerkes 10, wie in Figur 1 gezeigt, enthält einen Nachrichtenbus 12 für digitale Signale, an den eine Vielzahl von Netzknoten 14 angeschlossen sind. Jeder Netzknoten 14 ist zum Herstellen von Verbindungen mit einer oder mehreren peripheren Einheiten, im folgenden Peripherie 16 genannt, geeignet und zwar über einen Peripherieanschluß 18. Unter Peripherie kann jede Einheit verstanden werden, die Nachrichten übertragen und empfangen kann, wie z.B. eine Rechnereinheit oder ein Nachrichtenübermittlungssystem. Weiterhin ist jeder Netzknoten 14 über eine Kollisionserkennungseinheit 20 an einem Nachrichtenbusanschluß 22 geführt. Ferner enthält jeder Netzknoten 14 eine Nachrichtenverkehrssteuerung 24, die Daten von der Peripherie 16 empfangen und zum Übertragen auf den Nachrichtenbus 12 einblenden kann. Sie empfängt außerdem Daten über den Nachrichtenbus 12 und verteilt diese, gesteuert durch einen Mikroprozessor, entsprechend an die Peripherie 16.

Im hier beschriebenen Ausführungsbeispiel enthält jeder Netzknoten mindestens ein VLSI-Schaltkreis für die Nachrichtenverkehrssteuerung 24 mit einer speziellen Anzahl von binären Signaltoren.

Ein typisches VLSI-Netzknotenchip 26, wie in Figur 2 gezeigt, enthält ein Sendefreigabetor 28, ein Datensendetor 30, ein Datenempfangstor 32, ein Begleitsignalprüftor 34, ein Kollisionerkennungstor 36 und ein Sende-/Empfangstakttor 38. Über das Sende-/Epmfangstakttor 38 wird die Reihenfolge und die Synchronisation der zu sendenden/empfangenden Daten zu/von dem Nachrichtenbus 12 gesteuert.

Der Binärausgang des Sendefreigabetores 28 wechselt dabei seinen binären Zustand, wenn der Netzknoten 14 zum Senden von Daten auf den Nachrichtenbus 12 bereit ist. Das Datensendetor 30 und das Datenempfangstor 32 wechseln ihren binären Zustand, wenn entsprechend Daten zu senden oder zu empfangen sind. Durch das Begleitsignalprüftor 34 werden dem internen Schaltkreis des Netzknotenchips 26 mögliche Fehlfunktionen auf dem Nachrichtenbus 12 signalisiert. Das Kollisionserkennungstor 36 wird als binäre Zustandssteuerung zum zugelassenen/nicht zugelassenen Übertragen von Daten für das Netzknotenchip 26 benutzt. Dabei weist jedes Tor nur zwei Zustände (binär) auf und zwar ein Null- oder "low"-Zustand und ein Eins- oder "high "-Zustand.

In bekannten Systemen benötigen das Begleitsignalprüftor 34 und das Kollisionserkennungstor 36 untereinander und in Verbindung mit dem Nachrichtenbus 12 einen analogen Schaltkreis, um das analoge Begleitsignal überprüfen und erkennen zu können. Zusätzlich muß das analoge Begleitsignal digital gewandelt werden, da das VLSI-Netzknotenchip 26 an seinen Toren digitale Signale benötigt. Das Standardchip von IEEE 802.3 benötigt ferner ein 50 Ohm Koaxialkabel, das nicht länger als 500 Meter sein darf Bevorzugt werden hier entweder ein Chip von Intel Corporation Intel 82586, oder ein Chip von Advanced Micro Devices, AMD 7990, die Standardausgänge und Verbindungen aufweisen. Der Hauptunterschied unter den vielen bekannten Netzwerken liegt in der Schaltkreistechnik und dem Wandlerprinzip zum Wandeln des analogen Begleitsignales auf dem Nachrichtenbus 12 in das benötigte digitale Signal für das Netzknotenchip 26.

Es wurde festgestellt, daß viele Vorteile herleitbar sind, wenn die Netzknoten 14. z.B. eines Nahverkehrsnetzwerkes eng benachbart sind und wenn jeder Netzknoten 14 mehrere periphere Einheiten 16 ohne Hilfe durch eine zentrale Steuerung selbst steuern kann. Dadurch wird die Effizienz des Nachrichtenübermittlungsnetzwerkes 10 erweitert, wobei die Zuverlässigkeit der Datenübertragung selbst bei Ausfall von einem oder mehrerer Netzknoten 14 erhalten bleibt.

Bei einer solchen Anordnung der Netzknoten 14 wird es ermöglicht eine Kollisionserkennung über eine für die Kollisionserkennung dienenden Referenzbus zu schaffen, wobei dieser getrennt angeordnet von einem Datenbus ist. Wie noch erläutert wird, vermeidet eine solche Anordnung die üblich benötigten Erkennungsanordnungen für jeden Bus.

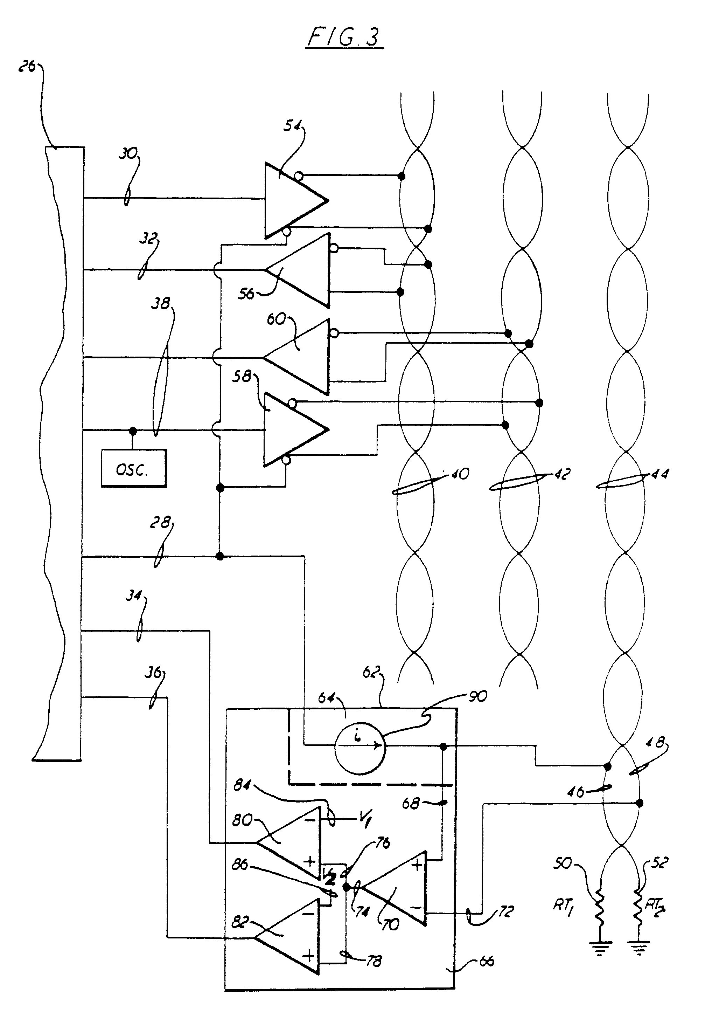

In Figur 3 wird ein bevorzugtes Ausführungsbeispiel gezeigt, in dem der Nachrichtenbus 12 des Netzknotens 14 durch drei getrennt angeordnete, verdrillte Leiterpaare (sogenannte twisted pairs) dargestellt wird. Ein erstes Paar 40 wird zum Senden und Empfangen von Daten benutzt. Ein zweites Paar 42 wird zum Übertragen von Taktsignalen für das Empfangen Senden und für die Synchronisation benutzt und ein drittes Paar 44 stellt den für die Kollisionserkennung dienenden Referenzbus 44 dar.

Der Hauptvorteil eines getrennt angeordneten Referenzbusses 44 besteht darin, daß seine Impedanz genau bekannt und überwachbar ist, da ein fester Abstand und eine feste Geometriebeziehung mit einem gemeinsamen Endpunkt besteht.

Eine Stromzuführleitung 46 und eine Überprüf- und Erkennungsleitung 48 des Referenzbusses 44 sind über Widerstände 52 bzw. 50 an Erde geführt. Die Widerstände 50, 52 werden hier als Präzisionswiderstände ausgeführt.

Das Datensendetor 30 und das Datenempfangstor 32 sind je an das erste Paar 40 - im folgenden Datenbus 40 genannt - geschaltet. Das Sende- Empfangstaktor 38 ist an das zweite Paar 42 - im folgenden Taktbus 42 genannt - angeschlossen. Schließlich sind das Begleitsignalprüftor 34 und das Kollisionserkennungstor 36 des Netzknotenchips 26 an den Referenzbus angeschlossen. Das Sendefreigabetor 28 ist. zum Steuern einer Konstantstromquelle 90. über diese mit dem Referenzbus 44, d.h. mit der Stromzuführleitung 46 verbunden.

Das Datensendetor 30 ist über eine Differentialtreiberstufe 54 mit Tristate-Ausgängen mit dem Datenbus 40 verbunden, wobei die Differentialtreiberstufe 54 durch ein vom Sendefreigabetor 28 kommendes Signal gesteuert wird. Das Datenempfangstor 32 ist über eine weitere Differentialtreiberstufe 56 mit dem Datenbus 40 verbunden, wobei die beiden Eingänge der Differentialtreiberstufe 56 entsprechend an das Leiterpaar des Datenbusses 40 geführt sind. Entsprechend sind die Sende-/Empfangstakttore 38 über Differentialtreibersufen 58 bzw. 60 mit dem Taktbus 42 verbunden.

Das Sendefreigabetor 28, das Begleitsignalprüftor 34 und das Kollisionserkennungstor 36 sind über eine Kollisionserkennungsschaltung 62 mit dem Referenzbus 44 verbunden.

Die Kollisionserkennungsschaltung 62 enthält einen Stromquellenteil 64 und einen Erkennungsteil 66. Durch einen Wechsel des Binärzustandes am Sendefreigabetor 28 wird durch den Stromquellenteil 64 ein Strom auf den Referenzbus 44 eingeprägt. Wenn das Netzknotenchip 26 Daten senden soll, wechselt das Sendefreigabetor 28 vom high-Zustand in den low-Zustand, um den Stromquellenteil 64 zum Einprägen eines Stromes auf die Stromzuführleitung 46 des Referenzbusses 44 anzusteuern. Dieser Strom wird gleichzeitig und zwar als entsprechende Spannung an einen Eingang 68 eines Differentialverstärkers 70 angelegt. Der andere Eingang 72 des Differenitalverstärkers 70 ist mit der Überprüf- und Erkennungsleitung 48 des Referenzbusses 44 verbunden. Der Ausgang 74 des Differentialverstärkers 70 zeigt somit die Differenz der Ströme auf den beiden Leitungen des Referenzbusses 44 an. Da die Impedanz des Referenzbusses fest vorgegeben und genau bekannt ist und die Impedanz des Differenitalverstärkers 70 so hochohmig gegenüber dem Widerstand 50 gewählt wird, stellt die Spannung am Eingang 68 des Differentialverstärkers 70 das Produkt aus der Anzahl von angesteuerten Stromquellenteilen 64 an der Stromzuführleitung 46 mal dem eingeprägten Strom dar. Die Widerstände 50 und 52 werden identisch gewählt, wobei ein Leckstrom auf dem Referenzbus 44 abgeglichen wird. Der Widerstand 52 kann auch weggelassen werden, wenn die Überprüf- und Erkennungsleitung 48 direkt mit Erde verbunden wird. Wählt man die Impedanz des Differentialverstäkers 70 zu 1012 Ohm, wobei die Widerstände 50, 52 100 Ohm aufweisen, so wird die Belastung des Referenzbusses 44 minimiert.

Der Ausgang 74 des Differenitalverstärkers 70 in dem Erkennungsteil 66 ist an die nichtinvertierenden (high-Zustand) Eingänge 76,78 zweier Spannungskomparatoren 80 und 82 geführt. Dabei ist der invertierende Eingang 84 des einen Spannungskomparators 80 und der invertierende Eingang 86 des anderen Spannungskomparators 82 mit einer Referenzspannung V1 bzw. V2 verbunden. Die Referenzspannung V1 wurde so gewählt, daß der Ausgang des einen Spannungskomparators 80 seinen binären Zustand dann ändert, wenn nur ein Stromquellenteil 64 im Nachrichtenübermittlungsnetzwerk 10 einen Strom auf die Stromzuführleitung 46 einprägt.

Die Referenzspannung V2 des anderen Spannungskomparators 82 ist ferner so gewählt, daß dessen binärer Ausgangszustand sich dann ändert, wenn zwei oder mehrere Stromquellenteile 64 Ströme auf die Stromzuführleitung 46 einprägen. Somit zeigt der Ausgang des einen Spannungskomparators 80 das Vorliegen eines eingeprägten Stromes und der Spannungskomparator 82 das Vorliegen von zwei oder mehreren eingeprägten Strömen auf dem Referenzbus 44 an.

Somit sind mögliche Fehlfunktion des Systems erkennbar und gleichzeitig die Anzahl von Zugriffen auf dem Referenzbus 44 feststellbar. Eine Fehlfunktion wird dann erkannt, wenn über das Sendefreigabetor 28 der Stromquellenteil 64 angesteuert wird, um einen Strom auf den Referenzbus 44 einzuprägen, aber das Begleitsignalprüftor 34 des Netzknotenchips 26 nicht das Vorhandensein eines solchen Stromes anzeigt.

Zeigen folglich die Ausgangszustände der Spannungskomparatoren 80, 82 daß nur ein einziger Netzknoten 14 Daten über den Datenbus 40 übertragen will, so wird die Differentialtreiberstufe 54 durch ein Freigabesignal über das Sendefreigabetor 28 zum Senden von Daten des Netzknotens 14 veranlaßt. Sollten dagegen die Spannungskomparatoren 80, 82 anzeigen, daß mehr als ein Netzknoten Daten übertragen will, wird das Freigabesignal zurückgehalten, so daß keine Übertragung von Daten zu diesem Zeitpunkt stattfinden kann.

Ferner, falls nun eine Datenkollision erkannt wird, verbleibt das Übertragungsanforderungssignal für eine vorgegebene Zeit auf dem Referenzbus 44, wobei diese Zeit in dem Netzknotenchip 26 programmierbar ist, um sicherzustellen, daß alle gerade sendenden Netzknoten 14 die Datenkollision erkennen können.

Eine solche Verzögerungszeit hilft Kollisionen von sendenden Netzknoten zu vermeiden, die noch nicht den Kollisionszustand auf dem Datenbus 40 vor der Netzknotenanfrage erkannt haben. Z.B., falls ein Netzknoten den Referenzbus 44 zur gleichen Zeit wie ein benachbarter Netzknoten ansteuert, könnten somit beide zu Senden beginnen, bevor sie die Gegenwart des jeweils anderen erkennen können.

Falls ein Sendewunsch eines Netzknotenchips 26 zurückgewiesen wird, berechnet dieses eine bestimmte Verzögerungszeit, bevor der ein erneuter Sendewunsch abgegeben wird. Eine solche Berechnung kann z.B. so erfolgen, daß zunächst eine Zufallszahl generiert wird, die dann mit der Anzahl von Versuchen multipliziert wird, die der serielle Netzknoten 14 bisher zum Senden einer bestimmten Nachricht versucht hat. Somit ist die Verzögerungszeit bei allen Netzknoten 14, die einen Sendewunsch zurückgewiesen bekommen haben, mit großer Wahrscheinlichkeit unterschiedlich lange, so daß weitere Kollisionen vermieden werden.

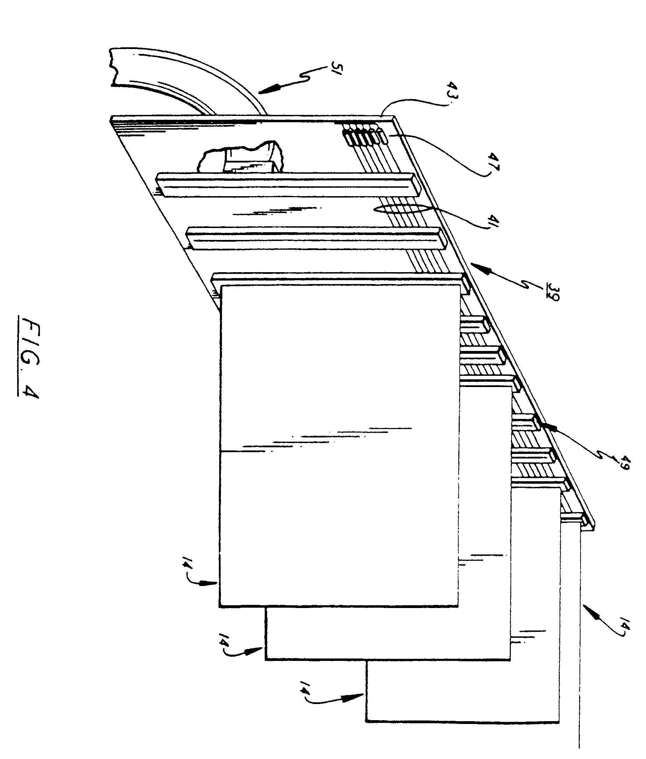

In einer weiteren Ausgestaltung ist die Erfindung für ein Nahverkehrsnetzwerk 39, wie in Figur 4 gezeigt, ausgelegt, das modular erweiterbar ist. In Figur 4 ist eine serielle Verdrahtungsrückwand 41 auf einer Hauptplatte 43 oder einer gedruckten Karte, gezeigt.

Die Verdrahtungsrückwand 43 weist drei Kupferleitungspaare auf, die den Referenzbus 44, den Taktbus 42 und den Datenbus 40 bilden und mit einer Leitungsnachbildung 47 abgeschlossen sind. Die Hauptplatte 43 enthält eine Vielzahl Anschlüsse 49 für gedruckte Platten, wobei die gedruckten Platten hier den Netzknoten 14 entsprechen. Weiterhin enthält das Nahverkehrsnetzwerk 39 eine Externverbindung 51, die z.B. ein Koaxialkabel sein kann. Jeder Nachrichtenaustausch zwischen Netzknoten 14, ob innerhalb des Nahverkehrsnetzwerkes 39 oder über ein größeres System, kann so gesteuert werden. Die Differentialtreiberstufen 54, 56 können durch einen einzigen integrierten Schaltkreis ausgeführt sein (ebenso die Differentialtreiberstufen 58, 60). Ein solcher integrierter Schaltkreis ist z.B. das Chip DS-3695 von National Semicondutor.

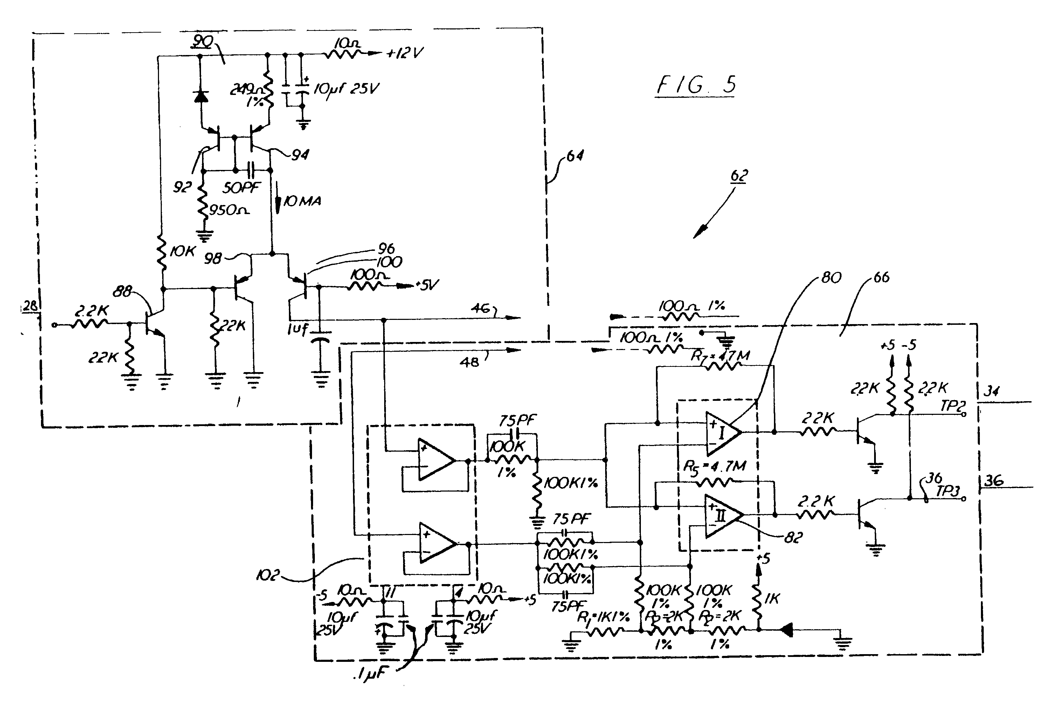

In Figur 5 ist eine Ausführung für die Kollisionserkennungsschaltung 62 mit dem Stromquellenteil 64 und dem Erkennungsteil 66 dargestellt.

Wie in der Darstellung des Stromquellenteils 64 zu erkennen ist, wird bei einem Zustandswechsel des Sendefreigabetores 28 ein Transistor 88 so gesteuert, daß eine Stromquelle 90, die ein Transistorpaar 92, 94 aufweist, einen Strom von 10 mA liefert. Dieser Strom fließt über einen Stromsteuerteil 96 zur Stromzuführleitung 46. Der Stromsteuerteil enthält ebenfalls ein Transistorpaar 98, 100.

Im Betrieb, wenn z.B. das Sendefreigabetor 28 einen high-Zustand aufweist, ist der Transistor 98 gegen Erde geschaltet. Falls nun der high-Zustand in den low-Zustand am Sendefreigabetor 28 übergeht, wird der Transistor 98 gesperrt und der Transistor 100 schaltet den Strom (10 mA) zur Stromzuführleitung 46 durch.

Der Erkennungsteil 66, wie in Figur 5 gezeigt, enthält eine Pufferschaltung 102, die als Impedanzwandler dient, (große Impedanz in niedrige Impedanz) um eine spürbare Belastung des Referenzbusses 44 zu vermeiden. Dies ermöglicht auch eine modulare Erweiterung des Nahverkehrsnetzwerkes 39, da durch eine Vielzahl von Netzknoten 14 die Impedanz des Referenzbusses 44 nicht geändert wird. Somit müssen auch die Referenzspannungen V1, V2 nicht neu eingestellt werden, wenn sich die Anzahl der Netzknoten 14 ändert. Die zwei Ausgänge der Pufferschaltung 102 dienen als Eingänge der Spannungskomparatoren 80, 82. Der Ausgang des einen Spannungskomparators 80 ist an das Begleitsignalprüftor 34 und der Ausgang des anderen Spannungskomparators 82 ist an das Kollisionserkennungstor 36 des Netzknotenchips 26 angeschlossen.

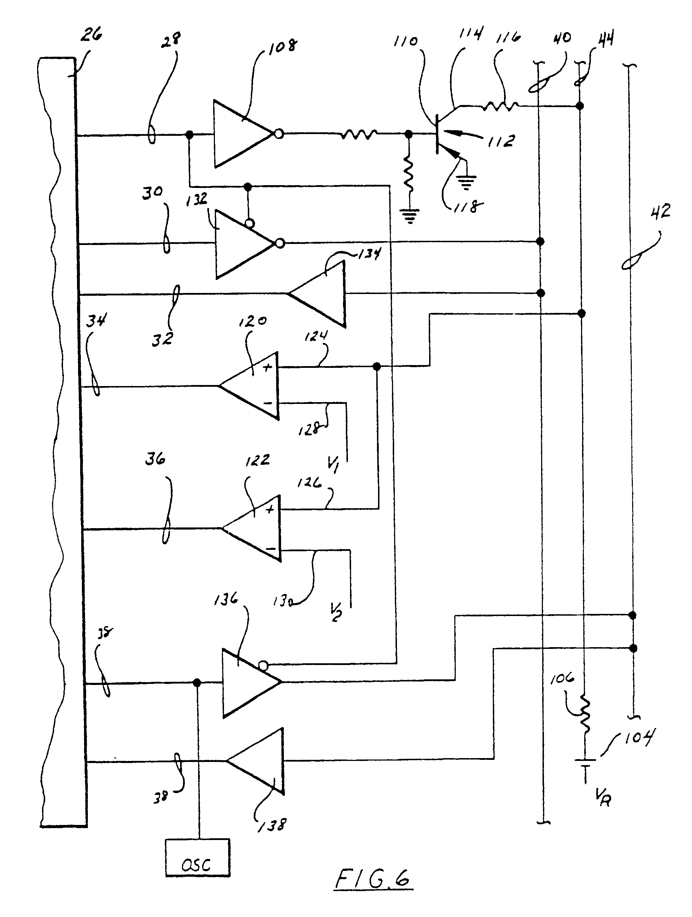

Figur 6 zeigt ein detailiertes Schaltbild eines weiteren Ausführungsbeispieles gemäß der Erfindung. Es sind wieder die drei räumlich voneinander getrennt angeordneten Leiter gezeigt und zwar der Referenzbus 44, der Taktbus 42 und der Datenbus 40, die alle drei allen Netzknoten 14 gemeinsam sind. Im folgenden wird zunächst noch einmal auf die funktionellen Beziehungen der einzelnen Tore eines Netzknotenchips 26 eingegangen.

Wenn z.B. die Nachrichtenverkehrssteuerung 24 eines Netzknotens 14 von der Peripherie 16 ein Signal empfängt, daß Daten übertragen werden sollen, wird über das Sendefreigabetor 28 ein Übertragungsanforderungssignal, d.h. ein Strom über die Stromquelle 90 auf den Referenzbus 44 eingeprägt. Gleichzeitig stellt das Begleitsignalprüftor 34, das ebenfalls mit dem Referenzbus 44 verbunden ist, die Belegung des Referenzbusses 44 fest. Es werden dabei nicht nur mögliche Fehlfunktionen des Systems festgestellt, sondern eben auch das Vorhandensein einer Belegung des Referenzbusses 44 bestimmt. Eine Fehlfunktion ist schnell erkannt, falls eine Übertragung veranlaßt wurde und das Kollisionserkennungstor 36 keine Belegung auf dem Referenzbus 44 festgestellt hat. Dabei stellt das Kollisionserkennungstor 36 gleichzeitig die Anzahl der Belegungen fest, und falls nur ein einziger Netzknoten 14, d.h. sein eigener Netzknoten 14, Daten senden will, wird ein Freigabesignal der Nachrichtenverkehrssteuerung 24 des Netzknotens 14 übermittelt.

Sollte der Pegel auf dem Referenzbus 44 die Belegung eines Netzknotens 14 erreichen, wird eine Datenübertragung zurückgewiesen. Falls eine Datenkollision erkannt wird, verbleibt das Übertragungsanforderungssignal für eine vorgegebene Zeit auf dem Referenzbus 44, um sicherzustellen, daß alle sendenden Netzknoten 14 die Datenkollision erkennen.

Unabhängig von der speziellen Ausführung bleibt jedoch die Impedanz des Referenzbusses 44 bekannt. Hier, gemäß Figur 6, ist eine Gleichspannungsquelle 104 mit dem Referenzbus 44 verbunden, die einen voreinstellbaren Gleichspannungspegel liefert. Diese Gleichspannungsquelle 104 kann mit jedem Netzknoten 14 oder gemeinsam für alle Netzknoten 14 vorgesehen sein.

Zur besseren Verdeutlichung ist in Figur 6 nur ein Netzknoten 14 gezeigt. Das Sendefreigabetor 28 ist auf den Eingang eines Inverters 108 geführt, dessen Ausgang mit der Basis 110 eines Transistors 112 verbunden ist, wobei der Kollektor 114 über einen Widerstand 116 an den Referenzbus 44 angeschlossen ist. Der Emitter 118 des Transistors 112 ist mit Erde verbunden. Das Begleitsignalprüftor 34 und das Kollisionserkennungstor 36 sind über einen Spannungskomparator 120 bzw. 122 mit dem Referenzbus 44 verbunden. Dabei sind die nichtinvertierenden Eingänge (high-Zustand) 124, 126 der Spannungskomparatoren 120 bzw. 122 miteinander verbunden und an den Referenzbus 44 geführt. Die Spannungen V1, V2 an den invertierenden Eingängen 128, 130 der Spannungskomparatoren 120 bzw. 122 sind so voreingestellt um im Hinblick auf das Begleitsignalprüftor 36 eine einfache freigegebene Belegung für den Referenzbus 44 anzuzeigen und im Hinblick auf das Kollisionserkennungstor 36 eine Schwellenspannung, die mehr als einer Belegung entspricht, anzuzeigen.

Für den Inverter 108 kann ein Chip von Typ 74LS04, für den Transistor 112 ein Typ 2N3904 und für die Spannungs komparatoren 120, 122 ein Typ LM339 verwendet werden.

Falls sich nun das Sendefreigabetor 28 im high-Zustand oder binär Eins-Zustand befindet, wird diese binäre Eins über den Inverter 108 in den binären Null-Zustand oder low-Zustand gewandelt. Diese dem Null-Zustand entsprechende Spannung hält den Transistor 112 gesperrt. Wenn nun das Chip 26 Daten zum Übertragen empfängt, geht der high-Zustand am Sendefreigabetor 28 in den low-Zustand über, wodurch über den Inverter 108 der Transistor 112 in den leitenden Zustand gesteuert wird. Der durch den Transistor 112 gezogene Strom verkleinert den Spannungspegel des angeschlossenen Referenzbusses 44 von 5 Volt auf etwa 2,6 Volt. Jeder weitere freigegebene Netzknoten 14 reduziert somit die Spannung auf dem Referenzbus 44. Wenn nun zwei Sendefreigabesignale vorliegen, verringert sich der Spannungspegel auf dem Referenzbus 44 auf den Wert von 1,8 Volt. Der mit den Begleitsignalprüftor 34 verbundene Spannungskomparator 120 hat an seinem invertierenden Eingang 128 eine Referenzspannung V1 von ca. 3,8 Volt, wodurch eine Zuschaltung oder Abschaltung wenigstens eines Netzknotens 14 auf den Referenzbus 44 feststellbar ist. Zusätzlich wird dadurch ein Versuch Daten zu übertragen angezeigt.

Wenn zwei Netzknoten 14 gleichzeitig Daten zu übertragen versuchen weist der Referenzbus 44 ein Spannungspegel von ca. 1,8 Volt auf, so daß bei Wahl der Referenzspannung V2 am invertierenden Eingang 130 des Spannungskomparators 122 von 2,2 Volt, dieses gleichzeitige Zugreifen durch das Kollisionserkennungstor 36 festgestellt wird. Dadurch wird ein Anlegen eines Sendefreigabesignales auf den Referenzbus 44 verhindert. Es erfolgt, wie bereits beschrieben, eine Berechnung eines erneuten Zugriffszeitpunktes im Chip 26.

Das Datensendetor 30 ist über eine Differentialtreiberstufe 132 mit dem Datenbus 40 und das Datenempfangstor 32 über eine weitere Differentialtreiberstufe 134 mit dem Datenbus 40 verbunden.

Entsprechend sind die Sende-/Empfangstakttore 38 über weitere Differentialtreiberstufen 136 bzw. 138 mit dem Taktbus 42 verbunden.

Die Differentialtreiberstufen 136 und 138 können z.B von Typ DS3691 bzw. DS3486 (National Semiconductor) sein.

Falls die Chips 26 relativ eng zueinander angeordnet sind, können Störgeräusche und Interferenzen die Spannungspegel der Spannungskomparatoren 120, 122 beeinflussen. Sind sie dagegen zu weit voneinander angeordnet, muß der Spannungspegel auf dem Referenzbus 44 verstärkt oder regeneriert werden, um entsprechende Pegel für die entfernteren Netzknoten bereitzustellen.

**Ansprüche**

1. Schaltungsanordnung zum dezentralen Erkennen von Nachrichtenkollisionen in einem Nachrichtenübermittlungsnetzwerk (10), an das eine Vielzahl von über einen Datenbus (40) verbundene Netzknoten (14) angeschlossen sind, wobei jeder Netzknoten (14) eine Kollisionserkennungsschaltung (62) mit einem Stromquellenteil (64) und einem Erkennungsteil (66) enthält, **dadurch gekennzeichnet,** daß der Datenbus (40) und ein räumlich getrennt angeordneter, für die Kollisionserkennung dienender Referenzbus (44) mit jedem Netzknoten (14) verbunden sind, daß der Stromquellenteil (63) der Kollisionserkennungsschaltung (62) eines Netzknotens (14) zum Einprägen eines Stromes mit einer Stromzuführleitung (46) des Referenzbusses (44) verbunden ist und daß der Erkennungsteil (66) einen Differentialverstärker (70) und zwei Spannungskomparatoren (80, 82) aufweist, wobei der Differentialverstärker (70) mit einem ersten Eingang (68) und einem zweiten Eingang (72) an die Stromzuführleitung (46) bzw. an eine überprüf- und Erkennungsleitung (48) des Referenzbusses (44) und mit einem Ausgang (74) an die Spannungskomparatoren (80, 82) angeschlossen ist, an deren Ausgängen Signale zum kollisionsfreien Steuern von Nachrichtenübertragungen über den Datenbus (40) vorliegen.

2. Schaltungsanordnung nach Anspruch 1, dadurch gekennzeichnet, daß der Stromquellenteil (64) eine Konstantstromquelle (90) enthält, die über ein binäres Signal angesteuert wird, das über ein Sendefreigabetor (28) einer Nachrichtenverkehrssteuerung (24) des Netzknotens (14) abgegeben wird.

3. Schaltungsanordnung nach Anspruch 1 oder 2, dadurch gekennzeichnet, daß der Referenzbus (44) eine feste jedem Netzknoten (14) bekannte Impedanz aufweist.

4. Schaltungsanordnung nach Anspruch 3, dadurch gekennzeichnet, daß zwischen dem Differentialverstärker (70) und dem Referenzbus (44) eine als Impedanzwandler dienende Pufferschaltung (102) angeordnet ist, so daß unabhängig von der Anzahl angeschlossener Differentialverstärker (70) die Impedanz des Referenzbusses (44) konstant ist.

5. Schaltungsanordnung nach Anspruch 1, dadurch gekennzeichnet, daß ein nichtinvertierender Eingang (76) des ersten Spannungskomparators (80) mit dem Ausgang (74) des Differentialverstärkers (70) und ein invertierender Eingang (84) des ersten Spannungskomparators (80) mit einer Referenzspannungsquelle (V1) verbunden ist, so daß der erste Spannungskomparator (80) immer dann seinen binären Ausgangszustand ändert, wenn wenigstens der Strom einer Konstantstromquelle (90) auf den Referenzbus (44) eingeprägt wird.

6. Schaltungsanordnung nach Anspruch 5, dadurch gekennzeichnet, daß ein nichtinvertierender Eingang (78) und ein invertierender Eingang (86) des zweiten Spannungskomparators (82) mit dem Ausgang (74) des Differentialverstärkers (70) bzw. mit einer weiteren Referenzspannungsquelle (V2) verbunden sind, wobei der zweite Spannungskomparator (82) seinen binären Ausgangszustand ändert, wenn wenigstens Ströme zweier Konstantstromquellen (90) auf den Referenzbus (44) eingeprägt werden.

7. Schaltungsanordnung zur dezentralen Erkennen von Nachrichtenkollisionen in einem Nachrichtenübermittlungsnetzwerk (10), an das eine Vielzahl von über einen Datenbus (40) verbundene Netzknoten (14) angeschlossen sind, die selbständig Nachrichten übertragen, dadurch gekennzeichnet, daß der Datenbus (40) und ein räumlich getrennt angeordneter für die Kollisionserkennung dienender Referenzbus (44) mit jedem Netzknoten (14) verbunden sind, daß der Referenzbus (44) mit einer Gleichspannungsquelle (104) verbunden ist, die einen voreinstellbaren Gleichspannungspegel liefert, daß jeder Netzknoten (14) über einen binär ansteuerbaren Transistor (112) mit dem Referenzbus (44) verbunden ist, wobei im durchgesteuerten Zustand des Transistors (112) der Spannungspegel auf dem Referenzbus (44) um einen vorgebbaren Wert verringert wird und daß an den Referenzbus (44) zwei Spannungskomparatoren (120, 122) angeschlossen sind, die in Abhängigkeit des auf dem Referenzbus (44) anliegenden Spannungspegels an ihren Ausgängen Signale zum kollisionsfreien Steuern von Nachrichtenübertragungen über den Datenbus (40) liefern.

8. Schaltungsanordnung nach Anspruch 7, dadurch gekennzeichnet, daß ein nichtinvertierender Eingang (124) und ein invertierender Eingang (128) des ersten Spannungskomparators (120) mit dem Referenzbus (44) bzw. mit einer Referenzspannungsquelle (V1) verbunden sind, wobei der erste Spannungskomparator (120) seinen binären Ausgangszustand ändert, wenn der Spannungspegel auf dem Referenzbus (44) wenigstens um den durch einen durchgesteuerten Transistor (112) verursachten Spannungsabfall verringert wird.

9. Schaltungsanordnung nach Anspruch 7 oder 8, dadurch gekennzeichnet, daß ein nichtinvertierender Eingang (126) und ein invertierender Eingang (130) des zweiten Spannungskomparators (122) mit dem Referenzbus (44) bzw. mit einer weiteren Referenzspannungsquelle (V2) verbunden sind, wobei der zweite Spannungskomparator (122) seinen binären Ausgangszustand ändert, wenn der Spannungspegel auf dem Referenzbus (44) wenigstens um den durch zwei durchgeschaltete Transistoren (122) verursachte Spannungsabfall verringert wird.

10. Schaltungsanordnung nach Anspruch 8, dadurch gekennzeichnet, daß zwischen jedem Transistor (112) eines Netzknotens (14) und dem Referenzbus (44) eine feste Impedanz über einen Widerstand (116) eingestellt ist.

11. Schaltungsanordnung nach einem der Ansprüche 1 oder 7, dadurch gekennzeichnet, daß ein Nahverkehrsnetzwerk (39) mittels einer Hauptplatte (43) mit einer seriellen Verdrahtungsrückwand (41) aufgebaut ist, wobei die Verdrahtungsrückwand (41) den Datenbus (40) und den Referenzbus (44) enthält und daß die Hauptplatte (43) eine Vielzahl von Anschlüssen (49) für gedruckte Platten aufweist, wobei die gedruckten Platten als Netzknoten (14) ausgebildet sind.

**Claims**

1. Circuit arrangement for providing masterless collision detection in a communication network (10) having a plurality of nodes (14) interconnected via a data bus (40), each of said nodes (14) including a collision detection circuit (62) comprising a current source segment (64) and a collision detection segment (66), **characterized in** that the data bus (40) and a spatially separate collision reference bus (44) are connected to each node (14), that the current source segment (64) of the collision detection circuit (62) of a node (14) is connected to a current injection wire (46) of the reference bus (44) for injecting a current onto said reference bus (44), and that the collision detection segment (66) includes a differential amplifier (70) and two voltage comparators (80, 82), with the differential amplifier (70) having a first input (68) and a second input (72) connected to the current injection wire (46) and a sense and detect wire (48), respectively, of the reference bus (44) and having an output (74) coupled to the voltage comparators (80, 82), whose outputs provide signals for collision-free control of communications over the data bus (40).

2. A circuit arrangement as claimed in claim 1, characterized in that the current source segment (64) includes a constant current source (90) which is gated by a binary signal delivered via a transmit enable port (28) of a traffic control means (24) of the node (14).

3. A circuit arrangement as claimed in claim 1 or 2, characterized in that the reference bus (44) has a fixed impedance known to every node (14).

4. A circuit arrangement as claimed in claim 3, characterized in that a buffer (102) functioning as an impedance converter is interposed between the differential amplifier (70) and the reference bus (44), so that the impedance of the reference bus (44) is constant regardless of the number of connected differential amplifiers (70).

5. A circuit arrangement as claimed in claim 1, characterized in that a noninverting input (76) of the first voltage comparator (80) is connected to the output (74) of the differential amplifier (70), and an inverting input (84) of the first voltage comparator (80) is connected to a reference-voltage source (V1), so that the first voltage comparator (80) changes its binary output state whenever the current of at least one constant current source (90) is injected onto the reference bus (44).

6. A circuit arrangement as claimed in claim 5, characterized in that a noninverting input (78) and an inverting input (86) of the second voltage comparator (82) are connected to the output (74) of the differential amplifier (70) and to an additional reference-voltage source (Y2), respectively, said second voltage comparator (82) changing its binary output state when currents of at least two constant current sources (90) are injected onto the reference bus (44).

7. Circuit arrangement for providing masterless collision detection in a communication network (10) having a plurality of nodes (14) interconnected via a data bus (40), each of said nodes being capable of transmitting data, characterized in that the data bus (40) and a spatially separate collision detection reference bus (44) are connected to every node (14), that the reference bus (44) is connected to a DC voltage source (104) which establishes a presettable DC voltage level, that each node (14) is connected, via a transistor (112) capable of being gated by a binary signal, to the reference bus (44), with the voltage level on the reference bus (44) being reduced by a presettable value in the conducting state of the transistor (112), and that the reference bus (44) has two voltage comparators (120, 122) connected thereto which provide signals at their outputs depending on the voltage level of the reference bus (44) for collision-free control of communications over the data bus (40).

8. A circuit arrangement as claimed in claim 7, characterized in that a noninverting input (124) and an inverting input (128) of the first voltage comparator (120) are connected to the reference bus (44) and to a reference-voltage source (V1), respectively, said first voltage comparator (120) changing its binary output state when the voltage level on the reference bus (44) is reduced by at least the voltage drop caused by a transistor (112) biased into the conducting state.

9. A circuit arrangement as claimed in claim 7 or 8, characterized in that a noninverting input (126) and an inverting input (130) of the second voltage comparator (122) are connected to the reference bus (44) and to an additional reference-voltage source (V2), respectively, said second voltage comparator (122) changing its binary output state when the voltage level on the reference bus (44) is reduced by at least the voltage drop caused by two transistors (112) biased into the conducting state.

10. A circuit arrangement as claimed in claim 8, characterized in that between each transistor (112) of a node (14) and the reference bus (44), a fixed impedance is set via a resistor (116).

11. A circuit arrangement as claimed in claim 1 or 7, characterized in that a short-haul local area network (39) is constructed by means of a mother board (43) with a serial backplane (41), the backplane (41) containing the data bus (40) and the reference bus (44), and that the mother board (43) has a plurality of printed circuit board connectors (49), the printed circuit boards being designed as the nodes (14).

## Revendications

1. Dispositif de circuit d'identification décentralisée de collision d'informations dans un réseau de transmission de données (10), auquel est raccordée une série de noeuds de réseau (14) reliée par un bus de données (40), dont chaque noeud de réseau (14) comporte un circuit d'identification de collision (62) avec un élément de source de courant (64) et un élément d'identification (66), **caractérisé en ce que**, le bus de données (40) et un bus de référence (44) situé de manière séparée, est raccordé à chaque noeud de réseau (14) pour le bus de référence (44) servant au repérage de collisions, l'élément de source de courant (63) du circuit d'identification de collision (62) d'un noeud de réseau (14) est raccordé à un conducteur d'amenée de courant (46) du bus de référence (44) pour y imprimer un courant, et l'élément d'identification (66) prévoit un amplificateur différentiel (70) et deux comparateurs de tension (80, 82), dont l'amplificateur différentiel (70) prévoit une première entrée (68) et une deuxième entrée (72) au conducteur d'amenée de courant (46) c.à.d. à un conducteur de vérification et d'identification(48) du bus de référence(44) et avec une sortie (74) raccordée aux comparateurs de tension(80,82), dont les signaux de sortie sont prévus pour la commande sans collision des transmissions d'informations sur le bus de données (40).

2. Dispositif de circuit selon la revendication 1, caractérisé en ce que, l'élément de source de courant(64) prévoit une source de courant constant(90), contrôlée par un signal binaire transmis par une porte de validation de transmission (28) de régulateur de circulation d'informations(24) du noeud de réseau (14).

3. Dispositif de circuit selon la revendication 1 ou 2, caractérisé en ce que, le bus de référence (44) prévoit une impédance fixe connue de chaque noeud de réseau (14).

4. Dispositif de circuit selon la revendication 3, caractérisé en ce qu'un circuit-tampon (102) servant de transformateur d'impédance est prévu entre l'amplificateur différentiel (70) et le bus de référence (44), de telle façon que sans égard au nombre d'amplificateurs différentiels (70) raccordés, l'impédance du bus de référence (44) reste constant.

5. Dispositif de circuit selon la revendication 1, caractérisé en ce qu'une entrée non-inversante (76) du premier comparateur de tension (80) est raccordée à la sortie (74) d'amplificateur différentiel (70) et qu'une entrée inversante (84) du premier comparateur de tension (80) est raccordée à une source de tension de référence (V1), de telle façon que l'état binaire du premier comparateur de tension (80) change toujours lorsque le courant provenant au minimum d'une source de courant constant (90) est imprimé sur le bus de référence (44).

6. Dispositif de circuit selon la revendication 5, caractérisé en ce qu'une entrée non-inversante (78) et une entrée inversante (86) du deuxième comparateur de tension (820) est raccordée à la sortie (74) d'amplificateur différentiel (70) et par exemple avec une autre source de tension de référence (V2), de telle façon que l'état binaire du deuxième comparateur de tension (82) change toujours lorsque les courants provenant d'un minimum de deux sources de courant constant (90) sont imprimés sur le bus de référence (44).

7. Dispositif de circuit d'identification décentralisée de collision d'informations dans un réseau de transmission de données (10), auquel par la liaison d'un bus de données (40) est raccordée une série de noeuds de réseau (14) transmettant automatiquement des informations, **caractérisé en ce que**, le bus de données (40) et un bus de référence (44) situé de manière séparée sont raccordés à chaque noeud de réseau (14) pour le bus de référence (44) servant au repérage de collisions, que le bus de référence (44) est relié à une source de courant continu(104) assurant un niveau programmable de courant continu, que chaque noeud de réseau(14) est raccordé au bus de référence(44) par un transistor à commande binaire(112), une réduction programmée de la valeur de tension du bus de référence (44) étant assurée lors du pilotage en liaison directe du transistor(112) et que deux comparateurs de tension(120, 122) sont raccordés au bus de référence (44), et selon le niveau de tension aux sorties dudit bus de référence (44) lesdits comparateurs apportent des signaux de pilotage éliminant les collisions de transmissions des données par le bus de référence (40).

8. Dispositif de circuit selon la revendication 7, caractérisé en ce qu'une entrée non-inversante (124) et une entrée inversante (128) du premier comparateur de tension (120) est raccordée au bus de référence (454) c.à.d. à une source de courant de référence (V1), l'état binaire du premier comparateur de tension (120) étant changé, lorsque le niveau de tension au bus de référence est au minimum diminué de la valeur de la chute de tension provoquée lors du pilotage en liaison directe d'un transistor (112).

9. Dispositif de circuit selon les revendications 7 ou 8, caractérisé en ce qu'une entrée non-inversante (126) et une entrée inversante (130) du deuxième comparateur de tension (122) sont raccordées au bus de référence (44) c.à.d. à une autre source de courant de référence (V2), l'état binaire du deuxième comparateur de tension (122) étant changé, lorsque le niveau de tension au bus de référence est au minimum diminué de la valeur de la chute de tension provoquée lors du pilotage en liaison directe de deux transistors (122).

10. Dispositif de circuit selon la revendication 8, caractérisé en ce qu'une impédance fixe est ajustée au moyen d'une résistance (116) entre chaque transistor (112) d'un noeud de réseau (14).

11. Dispositif de circuit selon l'une des revendications 1 ou 7, caractérisé en ce qu'un réseau de communications à courte distance (39) est construit à partir d'une platine principale (43) avec paroi séparatrice de câblage en série (41), ladite paroi (41) comportant le bus de données (40) et le bus de référence (44) et que la platine principale (43) prévoit une multiplicité de raccords (49) pour plaquettes de circuits imprimés, dont les plaquettes sont prévues comme noeuds de réseau (14).

FIG. 1

FIG. 2

EP 0 183 998 B1

## FIG. 3

FIG. 4

EP 0 183 998 B1

FIG. 5

EP 0 183 998 B1

FIG. 6

15